# EUROPÄISCHE PATENTANMELDUNG

(11) **EP 0 749 198 A2**
(43) Veröffentlichungstag der Anmeldung: **18.12.1996**
(21) Anmeldenummer: 96810339.0
(22) Anmeldetag: 28.05.1996
(51) Int. Cl.: H02K 17/16

(54) **Käfigläufer für eine Asynchronmaschine**

(30) Priorität: 14.06.1995 DE 19521700
(71) Anmelder: ABB Daimler-Benz Transportation (Schweiz) AG, 8050 Zürich (CH)
(72) Erfinder: Helfer, Peter, 5430 Wettingen (CH)
(74) Vertreter: Hetzer, Hans Jürgen

(57) **Zusammenfassung**

Bei einem Käfigläufer für eine Asynchronmaschine mit einem auf der Welle (1) befestigten, beidseits durch Pressringe zusammengehaltenen Blechkörper (2) zur Aufnahme der Käfigstäbe (3), sind diese ausserhalb des Blechkörpers (2) jeweils mit einem Kurzschlussring (4) fest verbunden. Jeder Kurzschlussring (4) ist in radialer Richtung durch einen auf der Welle festsitzenden Stützring (6) abgestützt.

Zur Ankopplung des Käfigkopfs an den Rotorkörper über den gesamten Drehzahlbereich der Maschine zwecks Unterdrückung von Eigenschwingungen sind beide Pressringe vom Blechkörper (2) axial distanziert und bilden gleichzeitig den Stützring (6) für den Kurzschlussring (4). Um die Belüftung des Wickelkopfes sicherzustellen, sind zwischen der Stirnfläche des Blechkörpers (2) und dem Stützring (6) Distanzstege (7) vorgesehen, die vorzusgweise mit dem Stützring (6) einstückig ausgebildet sind.

## Beschreibung

### TECHNISCHES GEBIET

Die Erfindung bezieht sich auf einen Käfigläufer für eine Asynchronmaschine mit einem auf der Welle befestigten, beidseits durch Pressringe zusammengehaltenen Blechkörper zur Aufnahme der Käfigstäbe, die ausserhalb des Blechkörpers jeweils mit einem Kurzschlussring fest verbunden sind und jeder Kurzschlussring in radialer Richtung durch einen auf der Welle festsitzenden Stützring abgestützt ist.

Die Erfindung geht dabei aus von einem Stand der Technik, wie er sich beispielsweise aus der DE 27 21 211 A1 ergibt.

### TECHNOLOGISCHER HINTERGRUND UND STAND DER TECHNIK

Bei schnelllaufenden Asynchronmotoren sind besonders die beiderseits aus dem Blechkörper ragenden Enden der Käfigstäbe und die mit ihnen verbundenen Kurzschlussringe durch hohe Temperaturen bei grossen Fliehkräften stark beansprucht und durch unkontrollierte Unwuchten gefährdet. Darüber hinaus weist jede gestabte Käfigkonstruktion im Bereich der freiliegenden Wicklung (Wickelkopf) eine Schwingungsfähigkeit in radialer und in Umfangsrichtung auf, die insbesondere bei Bahnmotoren zu schädlichen Resonanzschwingungen führen kann, weil es meist nicht gelingt, die Eigenfrequenzen ausserhalb der Anregefrequenzen, z.B. aus dem Getriebe (Ritzelzähne), zu legen.

Zur Berherrschung der Fliehkräfte im Bereich der Kurzschlussringe einer Asynchronmaschine werden seit vielen Jahren Schrumpfringe verwendet, die über den Kurzschlussring gestülpt sind. Der Schrumpfring dient nur der mechanischen Abstützung auf Biegung. Das ganze Gebilde ist nach wie vor schwingungsfähig.

Bei dem aus der DE 27 21 211 A1 bekannten Käfigläufer ist jeder Kurzschlussring durch einen auf der Welle festsitzenden Zentrierring festgelegt. Der Zentrierring liegt mit seiner Innenseite unter Axialdruck an den benachbarten Stirnende der Käfigstäbe an, und der freie Teil der Innenstirnseite des Zentrierrings weist eine ringförmige Aussparung auf, an deren Mantelfläche mit Abstand von der Ringnutstirnseite die Aussenringfläche eines Axialvorsprungs des Kurzschlussringes anliegt, dessen Innenringfläche die Welle mit radialem Abstand umgibt.

Die bekannte Konstruktion weist gute Dämpfungseigenschaften gegen aufgezwungene Schwingungen und Resonanzschwingungen auf. Sie ist aber im Grunde genommen nur für kleine Motoren mit kleinem Rotordurchmesser geeignet, weil der vergleichsweise massive Zentriering die Kühlung des Rotors, insbesondere eine optimale Durchströmung des Käfigkopfes, beeinträchtigt.

Ein anderer Weg zur Erhöhung der Drehschwingungssteifigkeit des Käfigkopfes einer Asynchronmaschine ist in der DE 42 33 474 C2 aufgezeigt. Dort sind die stirnseitig axial überstehenden Käfigstäbe im Endbereich derart unterteilt, dass getrennte radial übereinanderliegende Stabenden gebildet sind, und die jeweils zu einer Nut gehörenden Stabenden tangential gegensinnig abgekröpft sind. Diese Konstruktion ist sehr aufwendig und vermag die radiale Steifigkeit des Wickelkopfes nur in vergleichsweise geringem Umfang zu beeinflussen.

### KURZE DARSTELLUNG DER ERFINDUNG

Der Erfindung liegt die Aufgabe zugrunde, einen Käfigläufer für Asynchronmaschinen anzugeben, dessen Käfigkopf über den gesamten Drehzahlbreich der Maschine derart an den Rotorkörper angekoppelt ist, dass keine oder nur gedämpfte Eigenschwingungen auftreten können.

Diese Aufgabe wird erfindungsgemäss dadurch gelöst, dass beide Pressringe vom Blechkörper axial distanziert sind und gleichzeitig den Stützring für den Kurzschlussring bilden, dass zwischen der Stirnfläche des Blechkörpers und dem Stützring Distanzstege vorgesehen sind, die vorzusgweise mit dem Stützring einstückig ausgebildet sind.

Der Vorteil der Erfindung ist insbesondere darin zu sehen, dass auf diese Weise der Käfigkopf über den gesamten Drehzahlbreich der Maschine auch schon ab geringen Drehzahlen derart an den Rotorkörper angekoppelt ist, dass keine oder nur gedämpfte Eigenschwingungen auftreten können. Die erfindungsgemässe Lösung berücksichtigt dabei gleichzeitig Grössenänderungen des Kurzschlusskäfigs, welche sich aus Fliehkraft und Wärmedehnung im Käfigmaterial gegenüber dem Rotorkörper einstellen.

Ausführungsbeispiele der Erfindung sowie weitere damit erzielbare Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: eine erste Ausführungsform der Erfindung in Gestalt eines Längsschnitts durch die Endpartie eines Käfigläufers, wobei die Abstützung im wesentlichen mit einem Schrumpfring erfolgt;
- Fig.2: einen Querschnitt durch die Endpartie auf der Höhe des Pressrings des Käfigläufers gemäss Fig.1 längs deren Linie AA;
- Fig.3: eine erste Abwandlung der Ausführungsform von Fig.1 mit einem elastischen Glied zwischen Kurzschlussring und Stützring;
- Fig.4: eine zweite Ausführungsform eines Käfigläufers mit einem mit Materialausnehmungen versehenen Kurzschlussring;
- Fig.5: eine Draufsicht auf die Stirnseite des Käfigläufers nach Fig.4;
- Fig.6: eine dritte Ausführungsform eines Käfigläufers mit einem Stützring, der in eine Nut im Kurzschlussring eingreift und ein elastisches Glied enthält.

### WEGE ZUR AUSFÜHRUNG DER ERFINDUNG

Auf einer Welle 1 ist eine Blechkörper 2 in üblicher Weise befestigt. Der Blechkörper weist am Aussenumfang axial verlaufende Nuten auf, in welche Käfigstäbe 3 eingelegt und dort gegen Fliehkrafteinfluss radial gesichert sind. Die Käfigstäbe 3 überragen den Blechkörper 2 und sind mit einem Kurzschlussring 4 verbunden, der von der Stirnseite des Blechkörpers 2 deutlich beabstandet ist. Die überstehenden Enden der Käfigstäbe 3 und der Kurzschlussring 4 bilden den sogenannten Wickelkopf.

Die Enden der Käfigstäbe 3 verjüngen sich in radialer Richtung. Ueber den Kurzschlussring 4 ist ein Schrumpfring 5 gestülpt. Im Ringraum zwischen der Welle 1 und dem Kurzschlussring 4 ist ein Stützring 6 angeordnet, der mit der Welle 1 fest verbunden ist, z.B. auf diese aufgeschrumpft ist, und über seinen gesamten Aussenumfang am Innenumfang des Kurzschlussrings 4 anliegt. Dieser Stützring 6 ist von der Stirnseite des Blechkörpers 2 distanziert. Er weist auf seiner dem Blechkörper 2 zugewandten Seite eine Mehrzahl von radial verlaufenden Stegen oder Rippen 7 auf. Diese dienen sowohl als Distanzierung gegenüber dem Blechkörper 2 als auch als Pressfinger für den Blechkörper 2. Der Stützring übernimmt gleichzeitig die Funktion des Pressrings für den Blechkörper 2. Die axiale Fixierung des Stützring erfolgt in der selben Weise, wie es in der eingangs genannten DE 27 21 211 A1 beschrieben ist.

Beim Erkalten des Schrumpfrings 5 wirkt die Schrumpfkraft zunächst auf den Kurzschlussring 4 und dann auf den Stützring 6. Die Vorspannung des Schrumpfrings 5 ist dabei so bemessen, dass es in keinem Betriebspunkt der Maschine zu einer Aufhebung des Reibschlusses zwischen der inneren Mantelfläche des Kurzschlussrings 4 und äusseren Mantelfläche des Stützrings 6 kommt.

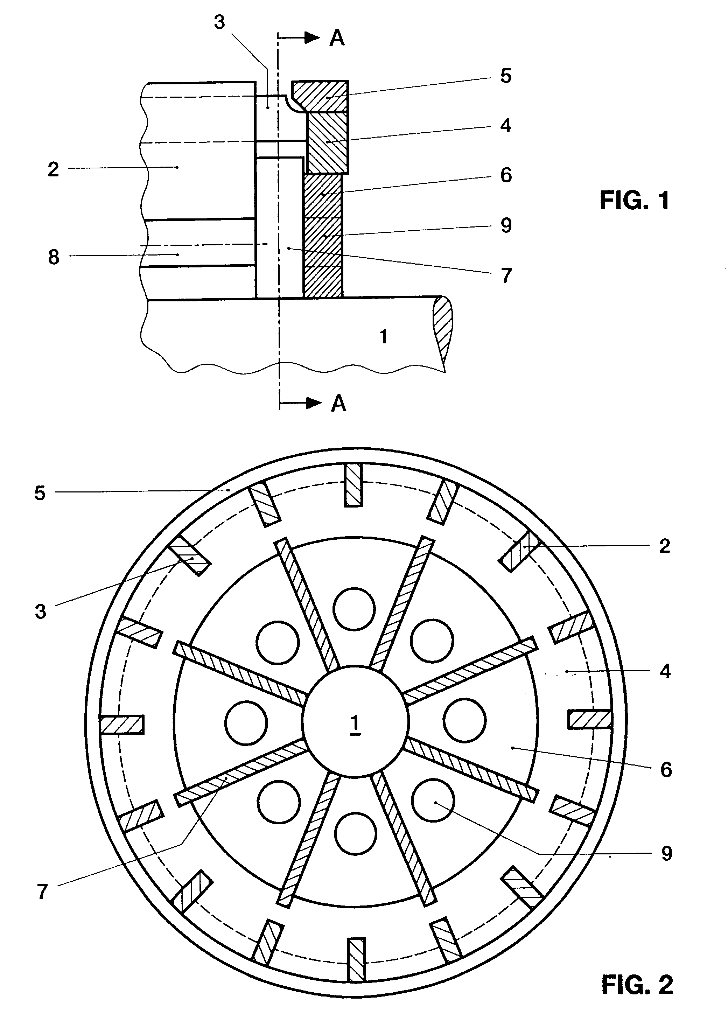

Wie aus Fig.1 gut zu erkennen ist, behindert die beschriebene Stützkonstruktion die Belüftung des elektrisch hochbeanspruchten Käfigkopf nur unwesentlich. Die Kühlluft kann praktisch unbehindert von den axialen Kühlluftbohrungen 8 im Blechkörper 2 durch die Distanzen zwischen den Stegen 7 radial nach aussen strömen. Im Bedarfsfall können darüber hinaus auch im Stützring 6 Durchgangsbohrungen 9 vorgesehen sind, die jeweils zwischen zwei benachbarten Stegen 7 liegen, aber nicht notwendig mit den Kühlluftbohrungen 8 fluchten müssen.

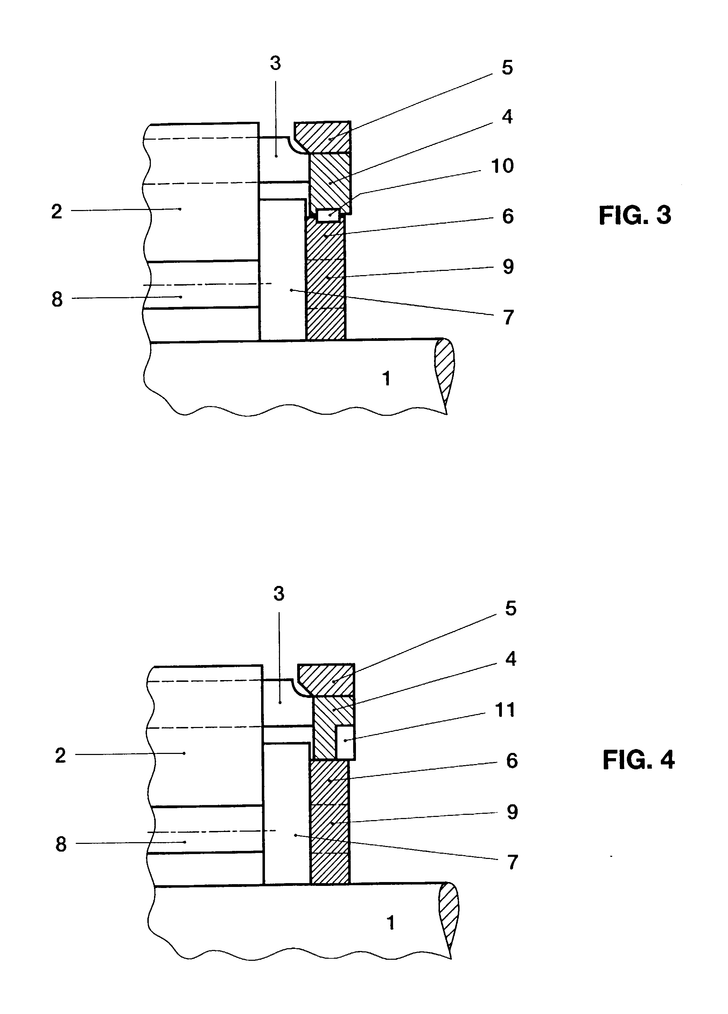

Bei der in Fig.3 dargestellten Weiterbildung des Käfigläufers nach Fig.1 bzw. 2 wird die Ankopplung des Kurzschlussrings 4 an den Stützring 6 durch ein elastisches Glied, z.B. eine Wellfeder 10, unterstützt. Diese Wellfeder 10 liegt teils in einer umlaufenden Nut in der äusseren Mantelfläche des Stützrings 6, teils in der inneren Mantelfläche des Kurzschlussrings 4. Analog zur Ausführungsform nach Fig.1 stützen sich Kurzschlussring 4 und Stützring 6 direkt aufeinander ab. Die Wellfeder 10 stellt dabei die Ankopplung für den Fall sicher, dass es doch zu einer Aufhebeung des Reibschlusses kommt.

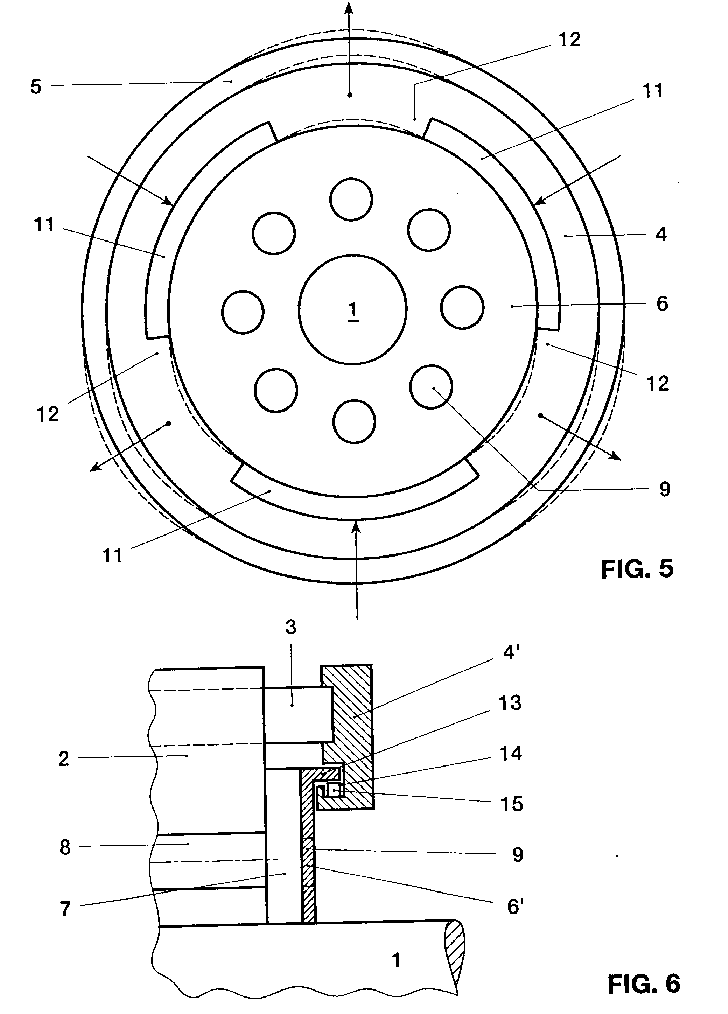

In der in den Fig.4 und 5 dargestellten Ausführungsform der Erfindung erfolgt die Sicherstellung des Reibschlusses und damit die Ankopplung zwischen Kurzschlussring 4 und Stützring 6 durch eine besondere Ausgestaltung des Kurzschlussrings. Anstelle eines Kurzschlussringes mit gleichförmigem Querschnitt in Umfangsrichtung weist der hier eingesetzte Kurzschlussring 4 eine gewollte Anisotropie in Umfangsrichtung auf. Diese Anisotropie wird dadurch erreicht, dass an im Beispielsfall drei Abschnitten des Kurzschlussrings 4 Materialausnehmungen 11 vorgesehen sind. Diese sind gleichmässig über den Innenumfang des Kurzschlussrings verteilt und erstrecken sich etwa über einen Winkel von je 60° bis 90°. In der Zone 12 zwischen den Materialausnehmungen liegt der Kurzschlussring 4 praktisch mit seiner gesamten Breite auf dem Stützring 6 auf, im Bereich der Materialausnehmungen 11 hingegen nur etwa auf seiner halben (ursprünglichen) Ringbreite. Diese Anisotropie hat im Betrieb der Maschine zur Folge, dass sich unter Fliehkrafteinwirkung eine Formänderung sowohl von Kurzschlussring 4 als auch Schrumpfring 5 ergibt, die in der Draufsicht nach Fig.5 strichliert und übertrieben gross eingezeichnet ist. Aus dieser Formänderung resultieren Kräfte in Radialrichtung, die durch Pfeile in Fig.5 symbolisiert sind, und die Ankopplung über den Reibschluss in den Zonen 12 eher verstärken.

Die geschilderte Anisotropie lässt sich selbstverständlich auch dadurch erreichen, dass anstelle von Materialausnehmungen 11 über den inneren Umfang des Kurzschlussrings 4 verteile Materialzugaben vorgesehen sind, was in Fig.4 bzw. 5 nicht ausdrücklich dargestellt ist.

Ohne den durch die Erfindung gesteckten Rahmen zu verlassen, kann bei gelöteten Käfigwicklungen aus legiertem Leitermaterial mit höherer Festigkeit die Ankopplung des Kurzschlussrings an den Stützring auch dergestalt erfolgen, dass der Stützring 6' am Aussenfang einen axial nach aussen gerichteten Vorsprung 13 aufweist, der in eine Ringnut 14 an der dem Blechkörper 2 zugewandten Stirnseite des Kurzschlussrings 4' eintaucht (Fig.6). Gemäss einer ersten Variante liegt dabei der axiale Vorsprung 13 am Stützring 6'mit seiner wellenseitige Mantelfläche an der wellenseitigen Nutwand an. Im Grenzfall kann er sogar formschlüssig in die Nut 14 am Kurzschlussring 4'eintauchen. Dies ergibt eine Ankopplung die progressiv mit der Erwärmung und Drehzahl stärker wird. Um nun die Beanspruchung des Vorsprungs 13 am Stützring 6'in Grenzen zu halten, ist es vorteilhaft, zwischen der inneren Mantelfläche des Vorsprungs 13 und der achsnahen Nutwand ein elastisches Glied, vorzugsweise eine Wellfeder 15 einzulegen.

### BEZEICHNUNGSLISTE

- 1: Welle
- 2: Blechkörper
- 3: Käfigstäbe
- 4 ,4': Kurzschlussring
- 5: Schrumpfring
- 6,6': Stützring (=Pressring)
- 7: Stege an 6
- 8: axiale Kühlluftbohrungen in 2
- 9: axiale Bohrungen in 6
- 10,15: Wellfedern
- 11: Materialausnehmungen in 4
- 12: Abschnitt zwischen 11
- 13: axialer Vorsprung an 6'
- 14: Ringnut in 4'

## Patentansprüche

1. Käfigläufer für eine Asynchronmaschine mit einem auf der Welle befestigten, beidseits durch Pressringe zusammengehaltenen Blechkörper (2) zur Aufnahme der Käfigstäbe (3), die ausserhalb des Blechkörpers (2) jeweils mit einem Kurzschlussring (4) fest verbunden sind und jeder Kurzschlussring (4) in radialer Richtung durch einen auf der Welle (1) festsitzenden Stützring (6) abgestützt ist, dadurch gekennzeichnet, dass beide Pressringe vom Blechkörper axial distanziert sind und gleichzeitig den Stützring (6) für den Kurzschlussring (4) bilden, dass zwischen der Stirnfläche des Blechkörpers (2) und dem Stützring (6) Distanzstege (7) vorgesehen sind, die vorzugsweise mit dem Stützring (6) einstückig ausgebildet sind.

2. Käfigläufer nach Anspruch 1, dadurch gekennzeichnet, dass der Kurzschlussring (4) mit seinem Innenumfang unmittelbar oder abschnittsweise unter Zwischenschaltung eines ersten elastischen Gliedes (10) auf dem Aussenumfang des Stützrings (6) aufliegt und durch einen Schrumpfring (5), der den Kurzschlussring (5) umgibt auf den Stützring (6) gepresst wird.

3. Käfigläufer nach Anspruch 2, dadurch gekennzeichnet, dass der Kurzschlussring (4) mit seinem gesamten Umfang auf dem Stützring (6) aufliegt.

4. Käfigläufer nach Anspruch 2, dadurch gekennzeichnet, dass am Aussenumfang des Stützrings (6) und/oder am Innenumfang des Kurzschlussrings (4) eine Nut vorgesehen ist, in welcher das erste elastische Glied, vorzugsweise eine Wellfeder (10), eingelegt ist.

5. Käfigläufer nach Anspruch 2, dadurch gekennzeichnet, dass der Kurzschlussring an seinem Innenumfang an drei oder mehreren Zonen, die gleichmässig über den Umfang verteilt sind, Materialausnehmungen (11) aufweist.

6. Käfigläufer nach Anspruch 2, dadurch gekennzeichnet, dass der Kurzschlussring an seinem Innenumfang an drei oder mehreren Stellen, die gleichmässig über den Umfang verteilt sind, Materialanhäufungen (12) aufweist.

7. Käfigläufer nach Anspruch 1, dadurch gekennzeichnet, dass der Stützring (6') am Aussenfang einen axial nach aussen gerichteten Vorsprung (13) aufweiset, der in eine Ringnut (14) an der dem Blechkörper (2) zugewandten Stirnseite des Kurzschlussrings (4') eintaucht.

8. Käfigläufer nach Anspruch 7, dadurch gekennzeichnet, dass der besagte axiale Vorsprung (13) am Stützring (6') mit seiner wellenseitige Mantelfläche an der wellenseitigen Nutwand anliegt, gegebenenfalls sogar formschlüssig in die Nut (14) am Kurzschlussring (4') eintaucht.

9. Käfigläufer nach Anspruch 7, dadurch gekennzeichnet, dass zwischen dem inneren Mantelfläche des Vorsprungs und der achsnahen Nutwand ein elastische Glied, vorzugsweise eine Wellfeder (10), eingelegt ist.
